# EUROPÄISCHE PATENTSCHRIFT

(11) **EP 2 137 419 B1**
(45) Veröffentlichungstag und Bekanntmachung des Hinweises auf die Patenterteilung: **12.10.2011**
(21) Anmeldenummer: 08734320.8
(22) Anmeldetag: 26.02.2008
(51) Int. Cl.: F16C 19/26, F16C 27/04, F16C 33/34, F16C 35/06

(54) **RADIALWÄLZLAGER, INSBESONDERE ZYLINDERROLLENLAGER ZUR LAGERUNG VON WELLEN IN WINDKRAFTGETRIEBEN**
RADIAL ANTI-FRICTION BEARING, PARTICULARLY CYLINDER ROLLER BEARING FOR THE SUPPORT OF SHAFTS IN WIND POWER GEARBOXES
ROULEMENT RADIAL, EN PARTICULIER ROULEMENT À ROULEAUX CYLINDRIQUES POUR LE MONTAGE D'ARBRES DANS DES MÉCANISMES MOTEURS À VENT

(30) Priorität: 03.03.2007 DE 102007010348
(43) Veröffentlichungstag der Anmeldung: 30.12.2009
(73) Patentinhaber: Schaeffler Technologies GmbH & Co. KG, 91074 Herzogenaurach (DE)
(72) Erfinder: ENDRES, Bernd, 97520 Röthlein (DE); HOFFINGER, Christian, 91166 Georgensgmünd (DE); MÜLLER, Tobias, 36160 Dipperz (DE); SMOLENSKI, Witold, Marek, 97422 Schweinfurt (DE)
(86) Internationale Anmeldenummer: PCT/DE2008/000339
(87) Internationale Veröffentlichungsnummer: WO 2008/106933

(56) Entgegenhaltungen:
- DE-A1- 2 741 057
- DE-A1- 19 734 980
- DE-B- 1 261 709
- FR-A- 2 479 369
- JP-A- 3 277 809
- SU-A1- 752 065
- US-A- 4 133 587

## Beschreibung

Die Erfindung betrifft ein Radialwälzlager nach den oberbegriffsbildenden Merkmalen des Patentanspruchs 1, und sie ist insbesondere vorteilhaft an zumindest zeitweise unter sehr geringer Last laufenden Lagern, wie beispielsweise Zylinderrollenlagern zur Lagerung von Wellen in Windkraftgetrieben, realisierbar.

### Hintergrund der Erfindung

Dem Fachmann in der Wälzlagertechnik ist es allgemein bekannt, dass Radialwälzlager bei ausreichender Belastung einen optimalen kinematischen Betriebszustand aufweisen, bei dem die Wälzkörper ohne zu gleiten auf den Laufbahnen des inneren und des äußeren Lagerrings abrollen. Des Weiteren ist es von zumindest zeitweise niedrig belasteten Radialwälzlagern bekannt, dass sich der aus den Wälzkörpern und deren Lagerkäfig bestehende Wälzkörpersatz aufgrund der Reibung im Lager beziehungsweise aufgrund der hohen Massenkraft des Wälzkörpersatzes und der zeitweise geringen Kontaktkraft zwischen den Wälzkörpern und den Laufbahnen nicht mit der kinematischen Drehzahl dreht. Die Drehzahl des Wälzkörpersatzes bleibt folglich gegenüber der kinematischen Drehzahl zurück, so dass sich die Wälzkörper in einem kinematisch nicht optimalen Zustand befinden, durch den zwischen diesen Wälzkörpern und mindestens einer Laufbahn Schlupf vorliegt. Dabei kann sich an den Kontaktflächen zwischen den Wälzkörpern und der Laufbahn ein Schmierfilm aufbauen, der jedoch bei plötzlicher Drehzahl- oder Belastungsänderung zerstört wird, so dass an den schlupfbehafteten Kontaktstellen innerhalb kürzester Zeit kein ausreichender Schmierfilm mehr vorliegt. Dies hat zur Folge, dass es zu einer metallischen Berührung der Laufbahn mit den Wälzkörpern kommt und diese auf der Laufbahn gleiten, bis die Wälzkörper auf die kinematische Drehzahl beschleunigt sind. Diese große Differenzgeschwindigkeit zwischen der Laufbahn und den Wälzkörpern sowie das Fehlen eines trennenden Schmierfilms ist somit ursächlich dafür, dass es in den Oberflächen der Laufbahn und der Wälzkörper zu hohen Tangentialspannungen kommt, die mit stärksten Verschleißerscheinungen, wie Aufrauhungen der Laufbahnen, Materialaufreißungen und Anschmierungen zumeist in Verbindung mit Mikropittings verbunden sind und zum vorzeitigen Ausfall des Radialwälzlagers führen.

Durch die FR 2 479 369 wurde deshalb ein gattungsbildendes Radialwälzlager vorgeschlagen, welches im Wesentlichen aus einem äußeren Lagerring mit einer inneren Laufbahn und aus einem koaxial zu diesem angeordneten inneren Lagerring mit einer äußeren Laufbahn sowie aus einer Vielzahl zwischen den Lagerringen auf deren Laufbahnen abrollender und durch einen Lagerkäfig in Umfangsrichtung in gleichmäßigen Abständen zueinander gehaltener Zylinderrollen besteht, bei dem zur Vermeidung des beschriebenen Schlupfeffektes zwischen den Zylinderrollen und den Lagerringen und der daraus resultierenden Nachteile mehrere gleichmäßig auf dem Umfang verteilte Zylinderrollen durch Hohlrollen ersetzt sind. Diese zudem axial etwas kürzer als die Zylinderrollen ausgebildeten Hohlrollen weisen einen geringfügig größeren Durchmesser und einen geringeren Elastizitätsmodul als die Zylinderrollen auf, so dass diese im lastfreien Zustand des Radialwälzlagers einen ständigen Kontakt zu den Lagerringen aufweisen und somit einen stetigen Antrieb des Lagerkäfigs und damit der Zylinderrollen mit kinematischer Drehzahl gewährleisten.

Als nachteilig bei derartig ausgebildeten Radialwälzlagern hat es sich jedoch erwiesen, dass die mit einem geringfügig größeren Durchmesser als die Zylinderrollen ausgebildeten Ronlrollen ursächlich dafür sind, dass die Montage und Demontage eines solchen Lagers erheblich erschwert bzw. nur mit zusätzlichem Aufwand möglich wird. Dies ist in der Tatsache begründet, dass der mitdrehende, zumeist innere Lagerring des Lagers einen dem Abstand jeweils zweier gegenüberliegender Zylinderrollen entsprechenden Außendurchmesser aufweisen muss, damit einerseits die Aufnahme der Lagerlast ausschließlich durch die Zylinderrollen gewährleistet ist und andererseits die im Durchmesser etwas größeren Hohlrollen die für den stetigen Antrieb des Lagerkäfigs notwendige Vorspannung erhalten. Da somit der Außenradius des inneren Lagerrings geringfügig größer als der Abstand zwischen der Lagerlängsachse und dem Außendurchmesser der Hohlrollen ist, ist eine herstellerseitig angestrebte Montage des inneren Lagerrings nur mit Hilfe einer zusätzlichen thermischen Behandlung möglich, bei der der äußere Lagerring zusammen mit dem Wälzkörpersatz soweit erhitzt wird, bis die dabei eintretende Wärmedehnung des äußeren Lagerrings ausreicht, um den inneren Lagerring in das Lager axial einzufügen. Zur Vermeidung eines solchen erhöhten Aufwandes beim Hersteller wäre es zwar möglich, den äußeren Lagerring mit dem Wälzkörpersatz und den inneren Lagerring des Radialwälzlagers als getrennten Montagesatz auszuliefern, das hätte jedoch zu Folge, dass das Verbauen des Radialwälzlagers, beispielsweise zur Lagerung von Wellen in Windkraftgetrieben, aufwändiger wird, indem zunächst der lose innere Lagerring mit einer Presspassung auf die Welle aufgesetzt und der äußere Lagerring mit dem Wälzkörpersatz mit einer Presspassung in eine Bohrung im Gehäuse eingesetzt werden. Danach muss das Gehäuse zusammen mit dem äußeren Lagerring und dem Wälzkörpersatz soweit erhitzt werden, bis die Welle mit dem inneren Lagerring axial in das Lager eingefügt werden kann, wobei mit der Abkühlung von Gehäuse und äußerem Lagerring die für den stetigen Antrieb des Lagerkäfigs notwendige Vorspannung an den Hohlrollen entsteht. Eine solche Verfahrensweise hat sich in der Praxis jedoch als zu aufwändig und kostenintensiv erwiesen und entspricht daher nicht den durch leichte Handhabbarkeit und kompakte Bauweise gekennzeichneten Anforderungen an moderne schlupffreie Radialwälzlager.

### Aufgabe der Erfindung

Ausgehend von den dargelegten Nachteilen des bekannten Standes der Technik liegt der Erfindung deshalb die Aufgabe zu Grunde, ein Radialwälzlager, insbesondere Zylinderrollenlager zur Lagerung von Wellen in Windkraftgetrieben, zu konzipieren, welches mit mehreren Hohlrollen zur Vermeidung von Schlupf zwischen den Zylinderrollen und den Lagerringen ausgebildet ist und sich durch leichte Handhabbarkeit insbesondere bei dessen Montage sowie durch kompakte Bauweise auszeichnet.

### Beschreibung der Erfindung

Erfindungsgemäß wird diese Aufgabe bei einem Radialwälzlager nach dem Oberbegriff des Anspruchs 1 derart gelöst, dass die Abmessungen der Lagerringe sowie der Zylinderrollen und der Hohlrollen derart ausgelegt sind, dass im nicht verbauten Zustand des montierten Radialwälzlagers sowohl die Zylinderrollen als auch die mit einem größeren Außendurchmesser als die Zylinderrollen ausgebildeten Hohlrollen zunächst eine definierte Radiallagerluft aufweisen und erst mit dem Verbauen des Radialwälzlagers die für den stetigen Antrieb des Lagerkäfigs notwendige Vorspannung an den Hohlrollen bei gleichzeitiger Minimierung der Radiallagerluft an den Zylinderrollen einstellbar ist.

Der Erfindung liegt somit die Erkenntnis zugrunde, dass es durch die Ausbildung aller Teile des Radialwälzlagers mit solchen Abmessungen, dass selbst die im Durchmesser größer als die Zylinderrollen ausgebildeten Hohlrollen eine definierte Radiallagerluft aufweisen, in einfacher Weise möglich ist, einerseits den äußeren Lagerring mit Wälzkörpersatz und den inneren Lagerring des Radialwälzlagers nicht mehr getrennt sondern vormontiert anzuliefern sowie andererseits das Radialwälzlager als komplette Baueinheit am Einsatzort verbauen und dabei die endgültige Radiallagerluft an allen Teilen einstellen zu können.

Bevorzugte Ausgestaltungen und Weiterbildungen des erfindungsgemäß ausgebildeten Radialwälzlagers werden in den Unteransprüchen beschrieben.

Danach ist es gemäß Anspruch 2 bei dem erfindungsgemäß ausgebildeten Radialwälzlager vorgesehen, dass der Außendurchmesser der Hohlrollen gegenüber dem Außendurchmesser der Zylinderrollen ein Übermaß aufweist, das geringer als die Hälfte der Radiallagerluft der Zylinderrollen im nieht verbauten Zustand des Radialwälzlagers ist. Wird also beispielsweise der Außendurchmesser der Hohlrollen gegenüber dem Außendurchmesser der Zytinderrollen mit einem Übermaß-von etwa 60 µm ausgebildet, ist die Gesamtradiallagerluft mit etwa 130 µm zu bemessen, damit an den Hohlrollen eine Radiallagerluft von etwa 10 µm gegenüber dem Außendurchmesser des inneren Lagerrings verbleibt. Dadurch ist gewährleistet, dass der lose, zumeist innere Lagerring wie bei einem herkömmlichen Radialwälzlager ohne Hohlrollen ohne jegliche weitere Maßnahmen, wie Erwärmen des feststehenden, zumeist äußeren Lagerrings oder auch Abkühlen des inneren Lagerrings, axial in das Lager eingesetzt und als vormontierte Baueinheit ausgeliefert werden kann.

Nach Anspruch 3 ist es schließlich noch ein weiteres Merkmal des erfindungsgemäß ausgebildeten Radialwälzlagers, dass die Einstellung der notwendigen Vorspannung der Hohlrollen sowie der minimierten Radiallagerluft der Zylinderrollen bevorzugt durch passungsbedingtes Aufweiten oder Einschnüren zumindest eines der beiden Lagerringe erfolgt. Darunter ist zu verstehen, dass das erfindungsgemäß ohne Vorspannung ausgebildete Radialwälzlager nunmehr mehrere vorteilhafte Möglichkeiten zur Montage an einer Wellenlagerung, wie beispielsweise in einem Getriebe von Windkraftanlagen, bietet, die jeweils auf entsprechenden Passungen in den Bohrungen des Gehäuses der Wellenlagerung oder des inneren Lagerrings basieren.

Eine erste bevorzugte Montagemöglichkeit besteht dabei beispielsweise darin, das Gehäuse der Wellenlagerung, ähnlich wie bei der Kurbelwellenlagerung einer Brennkraftmaschine, geteilt auszubilden und das Radialwälzlager zunächst komplett über eine Presspassung zwischen dem inneren Lagerring und der entsprechenden Welle auf dieser zu montieren, so dass dabei bereits der Großteil der für den stetigen Antrieb des Lagerkäfigs notwendigen Vorspannung entsteht. Das derart montierte Lager wird dann zusammen mit der Welle in eine erste Gehäusehälfte der Wellenlagerung eingelegt, so dass anschließend die zweite Gehäusehälfte das Lager umschließend auf die erste Gehäusehälfte aufgelegt und mit dieser verspannt werden kann. Die das Lager aufnehmende Bohrung im Gehäuse ist dabei derart dimensioniert, dass beim Verspannen der beiden Gehäusehälften der äußere Lagerring derart eingeschnürt wird, dass sich an den Hohlrollen des Lagers der Rest der für den stetigen Antrieb des Lagerkäfigs notwendige Vorspannung bei gleichzeitiger Minimierung der Radiallagerluft an den Zylinderrollen einstellt. Bei einer zweiten ebenfalls sehr vorteilhaften Montagemöglichkeit ist dagegen ein einteiliges Gehäuse für die Wellenlagerung vorgesehen, dessen Aufnahmebohrung für das Radialwälzlager jedoch ebenfalls geringfügig kleiner als der Außendurchmesser des äußeren Lagerrings dimensioniert ist. Auch hierbei wird das Radialwälzlager zunächst komplett über eine Presspassung zwischen dem inneren Lagerring und der entsprechenden Welle auf dieser montiert und anschließend zusammen mit der Welle in das Gehäuse eingesetzt. Da die Aufnahmebohrung im Gehäuse jedoch kleiner als der Außendurchmesser des äußeren Lagerrings ist, wird entweder das Gehäuse kurzzeitig örtlich an der Aufnahmebohrung erwärmt, bis durch die thermisch bedingte Aufweitung der Bohrung ein Einsetzen der Welle mit dem Radialwälzlager in die Bohrung möglich ist, oder es wird die Welle mit dem Lager soweit abgekühlt, bis ebenfalls ein Einsetzen der Welle mit dem Radialwälzlager in die Bohrung möglich ist. Durch die anschließende Abkühlung der Gehäusebohrung oder Erwärmung der Welle mit dem Lager wird dann der äußere Lagerring wieder derart eingeschnürt bzw. der innere Lagerring derart aufgeweitet, dass sich an den Hohlrollen des Lagers die für den stetigen Antrieb des Lagerkäfigs notwendige Vorspannung bei gleichzeitiger Minimierung der Radiallagerluft an den Zylinderrollen einstellt.

Eine zu den genannten Montagemöglichkeiten alternative dritte Montagemöglichkeit ist es schließlich noch, das Radialwälzlager zunächst komplett über eine Presspassung zwischen dem äußeren Lagerring und der Bohrung eines ebenfalls einteiligen Gehäuses in diesem Gehäuse zu montieren und ausschließlich die einzusetzende Welle soweit abzukühlen, bis diese axial in den inneren Lagerring eingeschoben werden kann Die anschließende Erwärmung der Welle ist dann ursächlich dafür, dass sich der innere Lagerring soweit aufweitet, dass an den Hohlrollen des Lagers wieder die für den stetigen Antrieb des Lagerkäfigs notwendige Vorspannung bei gleichzeitiger Minimierung der Radiallagerluft an den Zylinderrollen einstellt.

Zusammenfassend weist das erfindungsgemäß ausgebildete Radialwälzlager somit gegenüber den aus dem Stand der Technik bekannten Radialwälzlagern mit mehreren zwischen den Zylinderrollen und den Lagerringen angeordneten Hohlrollen den Vorteil auf, dass es durch die Ausbildung seiner Einzelteile mit solchen Abmessungen, dass im unverbauten Zustand selbst die im Durchmesser größer als die Zylinderrollen ausgebildeten Hohlrollen eine definierte Radiallagerluft aufweisen, beim Hersteller vormontierbar ist und sich somit durch eine kompakte Bauweise sowie durch eine erleichterte Handhabbarkeit insbesondere bei dessen Montage und Demontage an einer Wellenlagerung, wie beispielsweise in einem Getriebe von Windkraftanlagen, auszeichnet.

### Kurze Beschreibung der Zeichnungen

Eine bevorzugte Ausführungsform des erfindungsgemäß ausgebildeten Radialwälzlagers wird nachfolgend unter Bezugnahme auf die beigefügten Zeichnungen näher erläutert. Dabei zeigen:
- Figur 1: eine Seitenansicht eines erfindungsgemäß ausgebildeten Radialwälzlagers;
- Figur 2: den Querschnitt A - A durch das erfindungsgemäß ausge- bildete Radialwälzlager nach Figur 1;
- Figur 3a: einen vergrößerten Ausschnitt aus der Seitenansicht eines unver bauten erfindungsgemäßen Radialwälzlagers;
- Figur 3b: einen vergrößerten Ausschnitt aus der Seitenansicht eines verbauten erfindungsgemäßen Radialwälzlagers.

### Ausführliche Beschreibung der Zeichnungen

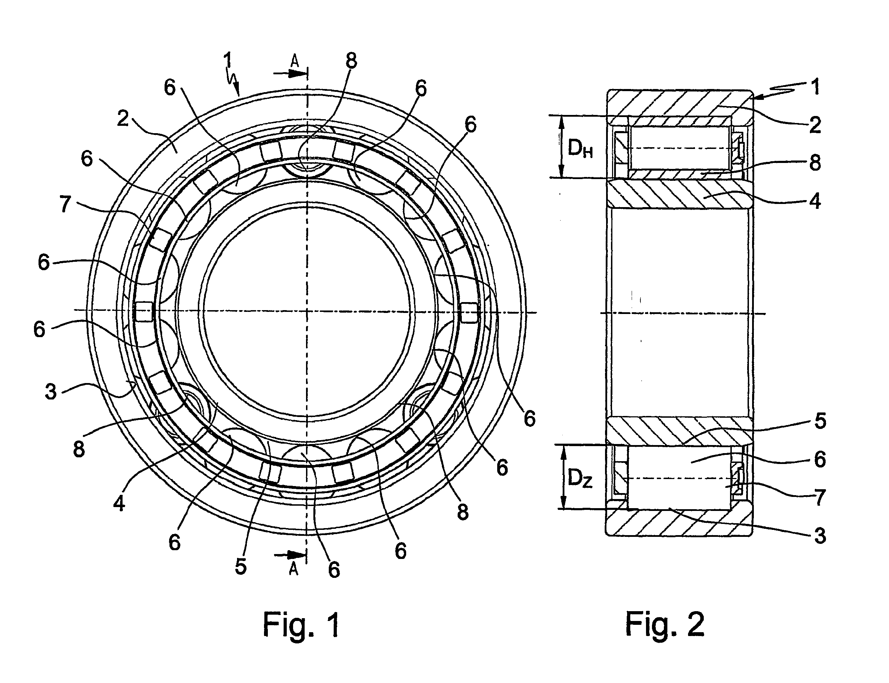

Aus den Darstellungen der Figuren 1 und 2 geht deutlich ein zur Lagerung von Wellen in Windkraftgetrieben geeignetes Radialwälzlager 1 hervor, welches in bekannter Weise aus einem äußeren Lagerring 2 mit einer inneren Laufbahn 3 und einem koaxial zu diesem angeordneten inneren Lagerring 4 mit einer äußeren Laufbahn 5 sowie aus einer Vielzahl zwischen den Lagerringen 2, 4 auf deren Laufbahnen 3, 5 abrollender Zylinderrollen 6 besteht, die durch einen Lagerkäfig 7 in Umfangsrichtung in gleichmäßigen Abständen zueinander gehalten werden. Ebenso ist aus den Zeichnungen klar ersichttich, dass bei dem dargestellten Radialwälzlager 1 zur Vermeidung- von Schlupf zwischen den Zylinderrollen 6 und den Lagerringen 2, 4 drei gleichmäßig auf dem Umfang verteilte Wälzkörper durch Hohlrollen 8 ersetzt sind, die einen geringfügig größeren Durchmesser D_{H} und einen geringeren Elastizitätsmodul als die Zylinderrollen 6 aufweisen. Dadurch weisen die Hohlrollen 8 im lastfreien Zustand des Radialwälzlagers 1 einen ständigen Kontakt zu den Lagerringen 2, 4 auf und gewährleisten somit einen stetigen Antrieb des Lagerkäfigs 7 und damit der Zylinderrollen 6 mit kinematischer Drehzahl.

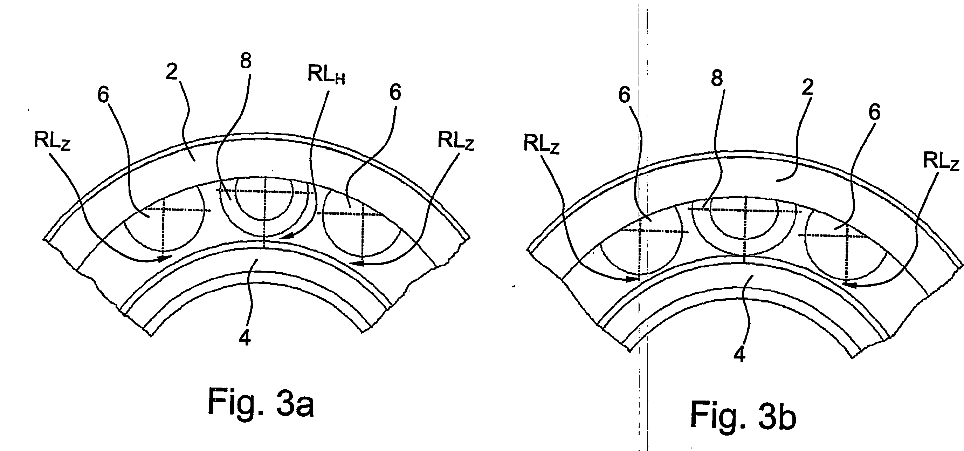

Den Figuren 3a und 3b ist darüber hinaus entnehmbar, dass zur Erleichterung der Montage eines derart ausgebildeten Radialwälzlager 1 die Abmessungen der Lagerringe 2, 4 sowie der Zylinderrollen 6 und der Hohlrollen 8 erfindungsgemäß derart ausgelegt sind, dass im der Darstellung gemäß Figur 3a entsprechenden nicht verbauten Zustand des montierten Radiaiwätzlagers 1 sowohl die Zylinderrollen 6 als auch die mit einem größeren Außendurchmesser D_{H} als die Zylinderrollen 6 ausgebildeten Hohlrollen 8 zunächst eine definierte Radiallagerluft RL_{Z}, RL_{H} aufweisen und erst im der Darstellung gemäß Figur 3b entsprechenden verbauten Zustand des Radialwälzlagers 1 mit der für den stetigen Antrieb des Lagerkäfigs 7 notwendigen Vorspannung an den Hohlrollen 8 bei gleichzeitiger minimierter Radiallagerluft RL_{z} an den Zylinderrollen 6 ausgebildet sind. Der Außendurchmesser D_{H} der Hohlrollen 8 weist dabei, wie andeutungsweise aus Figur 3a ersichtlich ist, gegenüber dem Außendurchmesser D_{z} der Zylinderrollen 6 ein Übermaß auf, das geringer als die Hälfte der Radiallagerluft RL_{z} der Zylinderrollen 6 im nicht verbauten Zustand des Radialwälzlagers 1 ist, so dass der lose innere Lagerring 4 wie bei herkömmlichen Radialwälziagern ohne jegliche weitere Maßnahmen axial in das Radialwälzlager 1 eingesetzt werden kann. Die Einstellung der notwendigen Vorspannung der Hohlrollen 8 sowie der minimierten Radiallagerluft RL_{z} der Zylinderrollen 6, wie sie in Figur 3b abgebildet ist, erfolgt dann durch passungsbedingtes Aufweiten oder Einschnüren zumindest eines der beiden Lagerringe 2, 4.

### Bezugszahlenliste

- 1: Radialwälzlager
- 2: äußerer Lagerring
- 3: innere Laufbahn
- 4: innerer Lagerring
- 5: äußere Laufbahn
- 6: Zylinderrollen
- 7: Lagerkäfig
- 8: Hohlrollen
- D_{z}: Außendurchmesser von 6
- D_{H}: Außendurchmesser von 8
- RL_{Z}: Radiallagerluft von 6
- RL_{H}: Radiallagerluft von 8

## Patentansprüche

1. Radialwälzlager, insbesondere Zylinderrollenlager zur Lagerung von Wellen in Windkraftgetrieben, welches im Wesentlichen aus einem äußeren Lagerring (2) mit einer inneren Laufbahn (3) und einem koaxial zu diesem angeordneten inneren Lagerring (4) mit einer äußeren Laufbahn (5) sowie aus einer Vielzahl zwischen den Lagerringen (2, 4) auf deren Laufbahnen (3, 5) abrollender Zylinderrollen (6) besteht, die durch einen Lagerkäfig (7) in Umfangsrichtung in gleichmäßigen Abständen zueinander gehalten werden, wobei zur Vermeidung von Schlupf zwischen den Zylinderrollen (6) und den Lagerringen (2, 4) mehrere gleichmäßig auf dem Umfang verteilte Zylinderrollen (6) durch Hohlrollen (8) ersetzt sind, die einen geringfügig größeren Außendurchmesser und einen geringeren Elastizitätsmodul als die Zylinderrollen (6) aufweisen, um im lastfreien Zustand des Radialwälzlagers (1) einen ständigen Kontakt zu den Lagerringen (2, 4) und somit einen stetigen Antrieb des Lagerkäfigs (7) und damit der Zylinderrollen (6) mit kinematischer Drehzahl gewährleisten, **dadurch gekennzeichnet, dass** die Abmessungen der Lagerringe (2, 4) sowie der Zylinderrollen (6) und der Hohlrollen (8) derart ausgelegt sind, dass im nicht verbauten Zustand des montierten Radialwälzlagers (1) sowohl die Zylinderrollen (6) als auch die mit einem größeren Außendurchmesser als die Zylinderrollen (6) ausgebildeten Hohlrollen (8) zunächst eine definierte Radiallagerluft (RL_{Z}, RL_{H}) aufweisen und erst mit dem Verbauen des Radialwälzlagers (1) die für den stetigen Antrieb des Lagerkäfigs (7) notwendige Vorspannung an den Hohlrollen (8) bei gleichzeitiger Minimierung der Radiallagerluft (RL_{Z}) an den Zylinderrollen (6) einstellbar ist.

2. Radialwälzlager nach Anspruch 1, **dadurch gekennzeichnet, dass** der Außendurchmesser (D_{H}) der Hohlrollen (8) gegenüber dem Außendurchmesser (D_{Z}) der Zylinderrollen (6) ein Übermaß aufweist, das geringer als die Hälfte der Radiallagerluft (RL_{Z}) der Zylinderrollen (6) im nicht verbauten Zustand des Radialwälzlagers (1) ist.

3. Radialwälzlager nach Anspruch 1, **dadurch gekennzeichnet, dass** die Einstellung der notwendigen Vorspannung der Hohlrollen (8) sowie der minimierten Radiallagerluft (RL_{Z}) der Zylinderrollen (6) bevorzugt durch passungsbedingtes Aufweiten oder Einschnüren zumindest eines der beiden Lagerringe (2, 4) erfolgt.

## Claims

1. Radial rolling bearing, in particular cylinder roller bearing for mounting shafts in wind power transmissions, which essentially comprises an outer bearing ring (2) with an inner raceway (3) and an inner bearing ring (4), which is arranged coaxially with respect thereto and has an outer raceway (5), and also a multiplicity of cylinder rollers (6) which roll between the bearing rings (2, 4) on their raceways (3, 5) and are held at uniform distances from one another in the circumferential direction by a bearing cage (7), with a plurality of cylinder rollers (6) which are distributed uniformly on the circumference being replaced by hollow rollers (8) in order to avoid slip between the cylinder rollers (6) and the bearing rings (2, 4), which hollow rollers (8) have a slightly larger outer diameter and a lower modulus of elasticity than the cylinder rollers (6), in order to ensure, in the load-free state of the radial rolling bearing (1), a continuous contact with the bearing rings (2, 4) and thus a continuous drive for the bearing cage (7) and thus for the cylinder rollers (6) at a kinematic rotation speed, **characterized in that** the dimensions of the bearing rings (2, 4) and also of the cylinder rollers (6) and of the hollow rollers (8) are configured such that, in the uninstalled state of the assembled radial rolling bearing (1), both the cylinder rollers (6) and the hollow rollers (8) which are formed with a larger outer diameter than the cylinder rollers (6) have initially a defined radial bearing play (RL_{Z}, RL_{H}), and the preload on the hollow rollers (8), with the simultaneous minimization of the radial bearing play (RL_{Z}) at the cylinder rollers (6), required for the continuous drive of the bearing cage (7) can be first set when the radial rolling bearing (1) is installed.

2. Radial rolling bearing according to Claim 1, **characterized in that** the outer diameter (D_{H}) of the hollow rollers (8) has an oversize with respect to the outer diameter (D_{Z}) of the cylinder rollers (6), which oversize is less than half of the radial bearing play (RL_{Z}) of the cylinder rollers (6) in the uninstalled state of the radial rolling bearing (1).

3. Radial rolling bearing according to Claim 1, **characterized in that** the required preload of the hollow rollers (8) and also the minimized radial bearing play (RL_{Z}) of the cylinder rollers are set preferably by means of a fit-induced expansion or contraction of at least one of the two bearing rings (2, 4).

## Revendications

1. Palier à roulement radial, en particulier palier à rouleaux cylindriques pour le support sur palier d'arbres dans des transmissions d'éoliennes, qui se compose essentiellement d'une bague de palier extérieure (2) avec une piste de roulement intérieure (3) et d'une bague de palier intérieure (4) disposée coaxialement à celle-ci, avec une piste de roulement extérieure (5), ainsi que d'une pluralité de rouleaux cylindriques (6) roulant entre les bagues de palier (2, 4) sur leurs pistes de roulement (3, 5), qui sont maintenus à distance régulière les uns des autres dans la direction périphérique par une cage de palier (7), plusieurs rouleaux cylindriques (6) répartis régulièrement sur la périphérie étant remplacés par des rouleaux creux (8) pour réduire le glissement entre les rouleaux cylindriques (6) et les bagues de palier (2, 4), lesquels rouleaux creux (8) présentent un diamètre extérieur légèrement plus grand et un module d'élasticité plus petit que les rouleaux cylindriques (6), afin de garantir dans l'état non sollicité du palier à roulement radial (1) un contact constant avec les bagues de palier (2, 4) et donc un entraînement constant de la cage de palier (7) et donc des rouleaux cylindriques (6) avec une vitesse de rotation cinématique, **caractérisé en ce que** les dimensions des bagues de palier (2, 4) ainsi que des rouleaux cylindriques (6) et des rouleaux creux (8) sont conçues de telle sorte que dans l'état non installé du palier à roulement radial monté (1), à la fois les rouleaux cylindriques (6) et les rouleaux creux (8) réalisés avec un plus grand diamètre extérieur que les rouleaux cylindriques (6) présentent d'abord un espace d'air de palier radial défini (RL_{Z}, RL_{H}), et seulement lors de l'installation du palier à roulement radial (1), la précontrainte nécessaire pour l'entraînement constant de la cage de palier (7) peut être ajustée sur les rouleaux creux (8) tout en minimisant en même temps l'espace d'air de palier radial (RL_{Z}) sur les rouleaux cylindriques (6).

2. Palier à roulement radial selon la revendication 1, **caractérisé en ce que** le diamètre extérieur (D_{H}) des rouleaux creux (8) présente par rapport au diamètre extérieur (D_{Z}) des rouleaux cylindriques (6) un surdimensionnement qui est plus petit que la moitié de l'espace d'air de palier radial (RL_{Z}) des rouleaux cylindriques (6) dans l'état non installé du palier à roulement radial (1).

3. Palier à roulement radial selon la revendication 1, **caractérisé en ce que** l'ajustement de la précontrainte nécessaire des rouleaux creux (8) ainsi que l'espace d'air de palier radial minimisé (RL_{Z}) des rouleaux cylindriques (6) a lieu de préférence par un élargissement ou un rétrécissement correspondant à l'ajustement d'au moins l'une des deux bagues de palier (2, 4).
